**Europäisches Patentamt**

**European Patent Office**

**Office européen des brevets**

(19)

(11) Veröffentlichungsnummer: **0 111 855**
A2

(12) # EUROPÄISCHE PATENTANMELDUNG

(21) Anmeldenummer: **83112432.6**

(22) Anmeldetag: **10.12.83**

(51) Int. Cl.³: **B 62 D 53/08**
**B 62 D 53/06**

(30) Priorität: **16.12.82 DE 3246581**

(43) Veröffentlichungstag der Anmeldung:
**27.06.84 Patentblatt 84/26**

(84) Benannte Vertragsstaaten:
**AT BE FR IT NL**

(71) Anmelder: **Behrmann, Georg, Dipl.-Ing.
Samtagstrasse 2
D-8560 Lauf a.d. Pegnitz(DE)**

(72) Erfinder: **Behrmann, Georg, Dipl.-Ing.
Samtagstrasse 2
D-8560 Lauf a.d. Pegnitz(DE)**

(74) Vertreter: **Kessel, Egbert, Dipl.-Ing. et al,
Patentanwälte Dr.jur. Dipl.-Ing. W. Böhme Dipl.-Ing. E.
Kessel Dipl.-Ing. V. Böhme Frauentorgraben 73
D-8500 Nürnberg(DE)**

(54) **Aus Zugfahrzeug und Wohnanhänger bestehendes Gespann.**

(57) Die Erfindung betrifft ein aus einem Zugfahrzeug und einen damit über eine Anhängerkupplung verbundenen Wohnanhänger bestehendes Gespann. Durch die Erfindung soll die große solcher Gespanne - bei gleichbleibender Nutzfläche - verringert und infolge einer günstigeren Lastverteilung auch dem ungeübten Fahrer ein risikoloseres und zügigeres Fahren ermöglicht werden. Das wird dadurch erreicht, daß der vordere Bereich des Wohnanhängers derart nach oben abgewinkelt ist, daß er sich oberhalb der Dachfläche des Zugfahrzeugs erstreckt, und das die Anhängerkupplung oberhalb des Nutzraums der Zugfahrzeugs angeordnet ist, wobei sich das eine Kupplungsteil an der Unterseite des nach oben abgewinkelten Bereichs des Wohnanhängers befindet und das andere Kupplungsteil am Zugfahrzeug gehalten wird.

FIG. 4

## Aus Zugfahrzeug und Wohnanhänger bestehendes Gespann

Die Erfindung betrifft ein aus einem Zugfahrzeug und einem damit über eine Anhängerkupplung verbundenen Wohnanhänger bestehendes Gespann. Als Zugfahrzeug kommen Personenkraftwagen aller Art, aber bsp. auch Kombifahrzeuge, Jeeps oder Safariwagen in Betracht.

Die Verbindung zwischen einem solchen Zugfahrzeug und einem Wohnanhänger geschieht üblicherweise mittels einer kardanisch gelenkigen Anhängerkupplung, deren eines Teil sich am Heck des Zugfahrzeugs und deren anderes Teil sich am freien Ende einer am Wohnanhänger befestigten Anhängedeichsel befindet. Durch diese Art der Verbindung entstehen verhältnismäßig lange Züge bzw. Gespanne von bis zu 14 m Länge, die eine erhebliche Schwerfälligkeit hinsichtlich des Fahrverhaltens, der Lenkfähigkeit und der Beweglichkeit bzw. Manövrierfähigkeit vor allem auf schmalen Straßen oder Gebirgsstrecken aufweisen. Insbesondere für ungeübte Fahrer ist ein solches Gespann nur schwer beherrschbar. Besonders ungünstig wird das Fahrverhalten des Zugfahrzeugs durch die weit hinten angreifende Deichsellast des Wohnanhängers beeinflußt; in schwierigen Situationen wie bei Vollbremsungen, starkem Seitenwind oder hohen Geschwindigkeiten kann es deshalb zu unkontrollierten Fahrzuständen kommen.

Der Erfindung liegt die Aufgabe zugrunde, ein Gespann zu schaffen, das bei gleicher Nutzfläche des Wohnanhängers wesentlich kürzer als die bekannten Gespanne ist und darüber hinaus durch eine günstigere Lastverteilung auch dem ungeübten Fahrer ein risikoloseres und zügigeres Fahren ermöglicht.

Diese Aufgabe wird erfindungsgemäß dadurch gelöst, daß der vordere Bereich des Wohnanhängers derart nach oben abgewinkelt ist, daß er sich oberhalb der Dachfläche des Zugfahrzeugs erstreckt, und daß die Anhängerkupplung oberhalb des Nutzraums des Zugfahrzeugs angeordnet ist, wobei sich das eine Kupplungsteil an der Unterseite des nach oben abgewinkelten Bereichs des Wohnanhängers befindet und das andere Kupplungsteil am Zugfahrzeug gehalten ist.

Aufgrund dieser Ausgestaltung läßt die Länge des Gespanns sich maximal um die Hälfte verringern, ohne daß dadurch die Nutzraumlänge verändert wird; die Längenminderung ist gleich der Länge des sich oberhalb der Dachfläche des Zugfahrzeugs erstreckenden Wohnanhänger-Bereichs zuzüglich üblicher Deisellänge. Außerdem wird jedoch durch die Verlegung der Anhängerkupplung über den Nutzraum des Zugfahrzeugs eine wesentlich günstigere Lastverteilung als bei den bekannten Gespannen mit am Heck des Zugfahrzeugs befindlicher Anhängerkupplung erzielt.

Neben diesen Hauptvorteilen der erfindungsgemäßen Ausgestaltung sind jedoch weitere, z.T. daraus resultierende Vorzüge zu nennen. So weist das neuartige Gespann ein wesentlich günstigeres ärodynamisches Verhalten als herkömmliche Gespanne auf; auch die Seitenwindempfindlichkeit ist infolge der verringerten Seitenflächen um etwa ein Drittel kleiner. Überhaupt werden alle seitlich auf den Wohnanhänger einwirkenden Kräfte wie Winddruck, Straßenunebenheiten und Fliehkräfte vom Zugfahrzeug etwa in der Nähe des Schwerpunkts aufgenommen. Beim Bremsen erhöht sich die Achslast des Zugfahrzeugs, was erhebliche Vorteile bringt. Durch den hochliegenden vorderen Gelenkpunkt wird die Kippneigeung des Wohnanhängers verringert, während dessen gefürchtete Pendelneigung durch den weit vorn angreifenden Auflagedruck ausgeschaltet wird. Die Beweglichkeit des neuartigen Gespanns ist vor allem auf Bergstrecken, in Ortschaften und auf engen Straßen wesentlich größer als die herkömmlicher Gespanne. Das Zugfahrzeug fährt zudem ständig im Schatten, was gerade im Sommer und in südlichen Ländern von großem Vorteil ist.

Durch die Anordnung des Wohnanhänger-Nutzraums in zwei Ebenen ergeben sich interessante Möglichkeiten der Innenraumgestaltung. Unter dem nach oben abgewinkelten Bereich des Wohnanhängers entsteht ein wettergeschützter Sitzplatz, der auch als Kinderspielplatz oder - mit entsprechender Abgrenzung durch Vorhänge - als Kinderschlafraum genutzt werden kann; es könnte sogar daran gedacht werden, diesen Raum - wiederum unter Verwendung von entsprechend angeordneten Vorhängen - als Garage für das Zugfahrzeug zu benutzen.

Die Höhe des nach oben abgewinkelten Bereichs des Wohnanhängers ist natürlich kleiner als die üblicher Wohnanhänger; sie erlaubt jedoch eine Nutzung des betreffenden Raums bsp. als Schlafkoje. Um diesen Raum nun uneingeschränkt nutzen zu können, ist in weiterer Ausgestaltung der Erfindung vorgesehen, daß das den nach oben abgewinkelten Bereich des Wohnanhängers überspannende Dachteil anhebbar ist, wobei der Raum unter dem angehobenen Dachteil zweckmäßigerweise mittels Planen, festen Bauelementen od.dgl. in einen allseitig geschlossenen Raum umwandelbar sein kann. Die festen Bauelemente könnten in den Wänden des nach oben abgewinkelten Bereichs des Wohnanhängers heb- und senkbar untergebracht sein; wenn sie ganz oder bereichsweise transparent sind, bietet sich aus dem oberen Raum des Wohnanhängers ein Panoramablick.

Für bestimmte Anwendungsfälle kann es sich empfehlen, den nach oben abgewinkelten Bereich des Wohnanhängers sich nach vorn über das Dach des Zugfahrzeugs hinaus erstrecken zu lassen und in der Wand des Wohnanhängers, welche dessen untere Bodenfläche mit der Bodenfläche des abgewinkelten Bereichs verbindet, eine vorzugsweise als Tür ausgebildete Öffnung vorzusehen.

Gemäß einem weiteren wesentlichen Merkmal der Erfindung befindet die Anhängerkupplung sich etwa auf der Hälfte des Radstands. Diesem Merkmal kommt deshalb besondere Bedeutung zu, weil es einerseits eine in etwa gleichmäßige Verteilung der auftretenden Kräfte auf die Vorder- und Hinterachse des Zugfahrzeugs gewährleistet und andererseits eine Anbringung der Anhängerkupplung im Bereich des zweiten Pfostens, d.h. also dort erlaubt, wo sich der stärkste Querschnitt des Zugfahrzeugs befindet.

Während sich das dem Wohnanhänger zugeordnete Kupplungsteil problemlos an der Unterseite von dessen nach oben abgewinkelten Bereich anbringen läßt, ist bezüglich des anderen, dem Zugfahrzeug zugeordneten Kupplungsteils in weiterer Ausgestaltung der Erfindung vorgesehen, dieses Teil auf einem biegesteifen Querträger anzubringen, der mittels zweier Seitenteile im Bereich des seitlichen Dachrahmens am Zugfahrzeug gehalten ist, wobei die Seitenteile der Kontur des Dachrahmens angepaßt und damit formschlüssig verbunden sind.

Die Befestigung des aus Querträger und Seitenteilen bestehenden gestellartigen Lagers für das Kupplungsteil des Zugfahrzeugs erfolgt also an den Seiten von dessen Dach, d.h. dort, wo das Dachblech durch Profile verstärkt mit den Seitenteilen der Karosserie verbunden ist. Die Erfindung macht sich dabei den Umstand zunutze, daß in den letzten Jahren bei fast allen Pkw-Modellen die sogenannte Raumzelle erheblich versteift und verstärkt worden ist, um bei Unfällen den Insassen größeren Schutz zu bieten. So sind bsp. die Dachkonstruktionen durch verbesserte Formgebung und steifere Pfosten derart ausgelegt worden, daß sie selbst bei seitlichem Abrollen des Pkw über das Dach noch ihre Form behalten. Die erfindungsgemäße Anbringung des dem Zugfahzeug zugeordneten Kupplungsteils zielt nun darauf ab, die aus dem Anhängerbetrieb herrührenden Kräfte so über das Dach des Zugfahrzeugs einzuleiten, daß sie von der Karosserie ohne Verformung aufgenommen werden. So lassen sich bsp. bei einer Einbeziehung der Regenlei-ste in die Verbindung erhebliche Kräfte in der Längsrichtung des Zugfahrzeugs aufnehmen.

Zweckmäßigerweise sind die Seitenteile mit dem Dachrahmen über lösbare Klemmteile verbunden oder aber damit verschraubt, vernietet, verklebt oder verschweißt. Dabei kann es sich als günstig erweisen, wenn die Seitenteile gegen das Dach des Zugfahrzeugs über Gummiformstücke abgestützt und mittels des Querträgers gespannt sind; auf diese Weise läßt sich die Klemmwirkung und damit die Übertragungsfähigkeit von Kräften in Längsrichtung des Zugfahrzeugs erhöhen.

Gemäß einem weiteren vorteilhaften Merkmal der Erfindung kann auch der Querträger gegen das Dach des Zugfahrzeugs mittels einer großflächigen elastischen Scheibe abgestützt sein. Diese Scheibe soll auf einer großen Fläche die Durchbiegung sowie etwa auftretende Schwingungen des Querträgers abfangen; sie kann in technisch besonders eleganter Weise als Saugnapf ausgebildet und evakuierbar sein, wodurch das gestellartige Lager eine Unterstützung bezüglich der Aufnahme von Brems- und Beschleunigungskräften erfährt.

Dieser Unterstützung dient auch ein weiteres Merkmal der Erfindung, demzufolge der Querträger in Längsrichtung des Zugfahrzeugs über Streben dagegen abgestützt ist.

In zweckmäßiger Weiterführung des Erfindungsgedankens kann der Querträger zum Gepäckträger umrüstbar sein. Überhaupt soll das gestellartige Lager für das Kupplungsteil des Zugfahrzeugs auf ähnliche Weise wie ein Dachgepäckträger handhabbar bzw. zu befestigen sein.

Bei einer anderen Ausführungsform der Erfindung ist das Kupplungsteil über einen Teller unmittelbar gegen das Dach des Zugfahrzeugs abgestützt, der mit einem gegen die Dachunterseite anliegenden Teller verspannt ist, welcher seinerseits mittels eines Stützteils mit dem Boden der Karosserie verbunden ist. Bei dieser Ausgestaltung findet eine besonders günstige Ableitung aller aus dem Anhängerbetrieb herrührenden Kräfte in den Boden des Zugfahrzeugs statt. Außerdem bietet das Stützteil eine vorteilhafte Möglichkeit zur Anbringung von Rückhalteeinrichtungen (Gurten).

In der Zeichnung ist ein bevorzugtes Ausführungsbeispiel der Erfindung dargestellt.

Es zeigen

Fig. 1 einen Wohnanhänger mit nach oben abgewinkeltem vorderen Bereich,

Fig. 2 ein Zugfahrzeug mit zugehörigem Kupplungsteil,

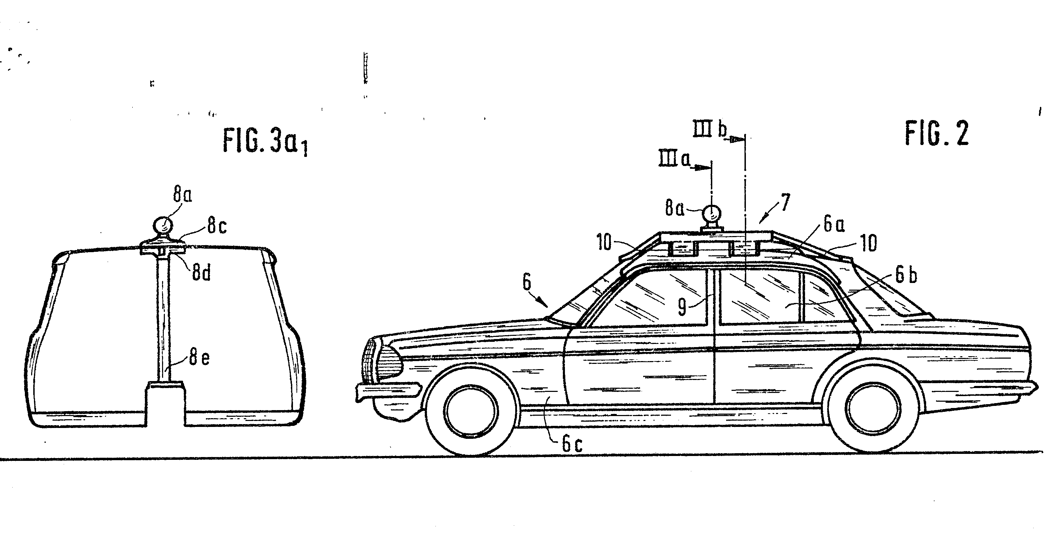

Fig. $3a_1$ und $3a_2$ eine Schnittansicht nach Linie IIIa in Fig. 2,

Fig. $3b_1$ und $3b_2$ eine Schnittansicht nach Linie IIIb in Fig. 2 in zwei Varianten und

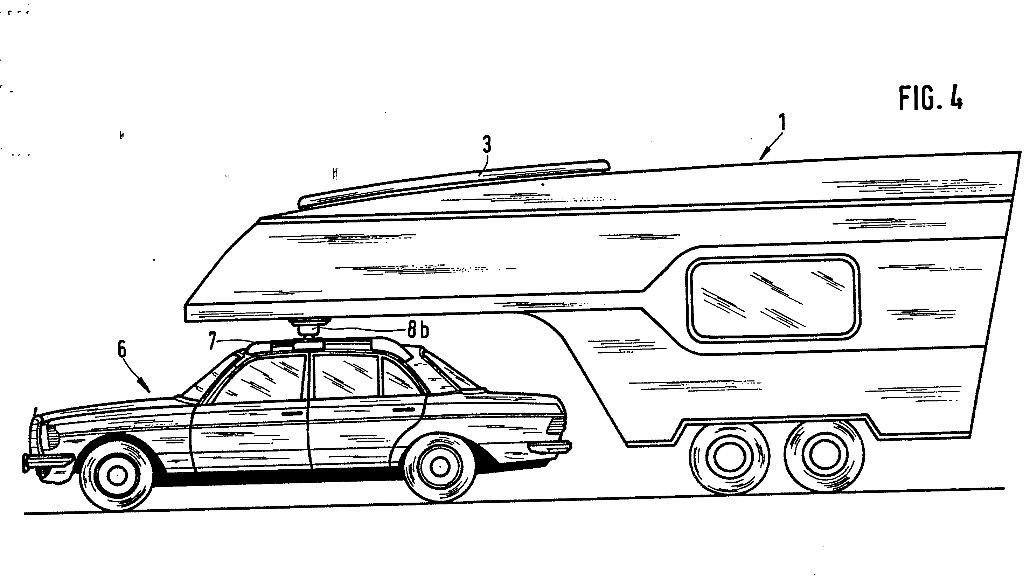

Fig. 4 ein aus Zugfahrzeug und Wohnanhänger bestehendes Gespann.

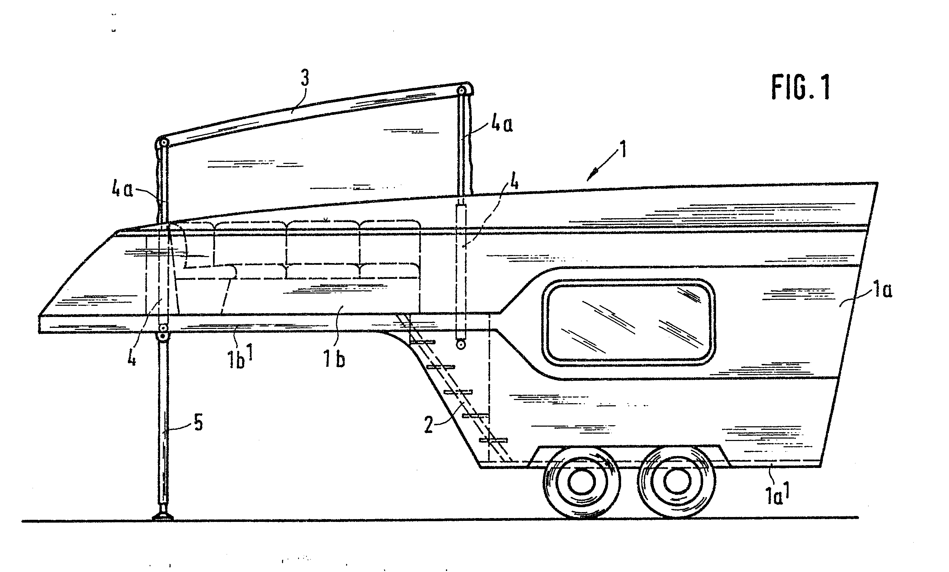

Der zweiachsige Wohnanhänger 1 gemäß Fig. 1 ist im abgestellten bzw. Parkzustand dargestellt. Er ist in einen hinteren Bereich 1a von normaler Höhe in einen vorderen, nach oben abgewinkelten Bereich 1b von wesentlich geringerer Höhe gegliedert; die auf unterschiedlichem Niveau liegenden Bodenflächen $1a_1$ und $1b_1$ der Bereiche 1a und 1b sind durch eine Treppe 2 miteinander verbunden.

Der Bereich 1b ist durch Anheben des ihn überspannenden Dachteils 3 auf normale Höhe gebracht. Das Dachteil 3 ist in seine gezeigte angehobene Stellung durch Ausfahren von vier Hubzylindern 4 überführt, deren Kolbenstangen 4a jeweils in den Ecken des Dachteils 3 angreifen. Zwischen den ausgefahrenen Kolbenstangen 4a können Planen verspannt oder feste Bauelemente angeordnet werden, so daß der Raum des Bereichs 1b ebenfalls allseitig geschlossen ist. - Mit 5 ist eine längenregelbare Stütze bezeichnet.

Der in Fig. 2 gezeigte Pkw stellt ein mögliches Zugfahrzeug 6 dar, an dessen Dach 6a ein gestellartiges Lager 7 befestigt ist, das ein als Kugel ausgebildetes Kupplungsteil 8a trägt. Dieses Kupplungsteil 8a befindet sich oberhalb des Nutzraums 6b des Zugfahrzeugs 6 etwa in der Mitte von dessen Radstand genau in der Querschnittsebene der beiden zweiten Pfosten 9, die eine stabilisierende Verbindung zwischen dem Dach 6a und der Karosserie 6c des Zugfahrzeugs 6 bilden. - Mit 10 sind Streben bezeichnet, die zur Abstützung des gestellartigen Lagers 7 in Längsrichtung des Zugfahrzeugs 6 bestimmt sind.

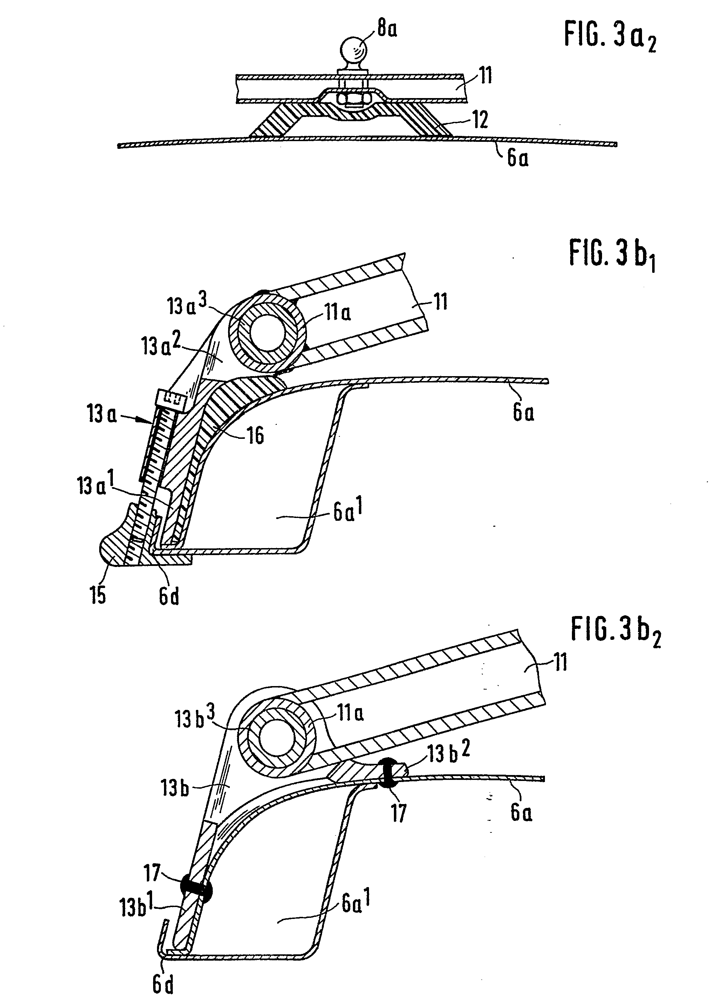

In den Fig. 3 sind Einzelheiten der Anbringung des Kupplungsteils 8a bzw. des gestellartigen Lagers 7 am Dach 6a des Zugfahrzeugs 6 dargestellt. Zunächst zeigen die Fig. $3a_1$ und $3a_2$ das Kupplungsteil 8a, das im Falle der Fig. $3a_1$ an einem auf dem Dach 6a des Zugfahrzeugs 6 gelagerten Teller 8c ansitzt, welcher mit einem entsprechenden, an der Dachunterseite befindlichen Teller 8d verspannt ist; dieser Teller 8d ist über ein Stützteil 8e mit dem Boden der Karosserie 6c verbunden. Im Falle der Fig. $3a_2$ ist das Kupplungsteil 8a in einem Querträger 11 gehalten und gegen das Dach 6a des Zugfahrzeugs 6 mittels einer großflächigen elastischen Scheibe 12 abgestützt, die als evakuierbarer Saugnapf ausgebildet ist.

Die Fig. $3b_1$ und $3b_2$ lassen Seitenteile 13a und 13b erkennen, die mit dem Dachrahmen $6a_1$ formschlüssig verbunden sind und das Lager für den Querträger 11 bilden. Das Seitenteil 13a der Fig. $3b_1$ ist mit seinem unteren Schenkel $13a_1$ in der Regenleiste 6d des Dachs 6a abgestützt, während sein oberer Schenkel $13a_2$ eine Achse $13a_3$ aufweist, auf welcher der Querträger 11 mittels einer endseitig angeordneten Bohrung 11a aufgeschoben ist. Im mittleren Bereich des Seitenstücks 13a befindet sich ein nach außen gerichteter Ansatz $13a_4$ mit einer von oben nach unten verlaufenden Bohrung, die von einer Bolzenschraube 14 durchdrungen ist, deren freies Ende in die Bohrung eines Klemmstücks 15 eindringt, das sich an der Regenleiste 6d abstützt. Zwischen der Innenfläche des Seitenteils 13a und der Außenfläche des Dachrahmens $6a_1$ ist ein Gummiformstück 16 angeordnet, das beim Anziehen der Bolzenschrauben 14 und dadurch erfolgendem Spannen der Seitenteile 13a und des Querträgers 11 elastisch verformt wird.

Das Seitenteil 13b der Fig. $3b_2$ ist mit seinem unteren Schenkel $13b_1$ ebenfalls in der Regenleiste 6d des Dachs 6a gelagert, während sein oberer Schenkel $13b_2$ wiederum mit einer Achse $13b_3$ versehen ist, auf welche der Querträger 11 mittels der endseitig angeordneten Bohrung 11a aufgeschoben ist. Im Gegensatz zur Ausführungsform der Fig. $3b_1$ ist das Seitenteil 13b am Dachrahmen $6a_1$ bzw. am Dach 6a jedoch nicht mittels eines Klemmstücks, sondern durch Nieten 17 befestigt.

Fig. 4 zeigt das Gespann im Fahrzustand, in dem das Kupplungsteil 8a des Zugfahrzeugs 6 mit dem Kupplungsteil 8b des Wohnanhängers 1 in Eingriff ist. Im Fahrzustand befindet sich das anhebbare Dachteil 3 in seiner abgesenkten Stellung.

Patentansprüche

1. Aus einem Zugfahrzeug und einem damit über eine Anhängerkupplung verbundenen Wohnanhänger bestehendes Gespann, dadurch gekennzeichnet, daß der vordere Bereich (1b) des Wohnanhängers (1) derart nach oben abgewinkelt ist, daß er sich oberhalb der Dachfläche (6a) des Zugfahrzeugs (6) erstreckt, und daß die Anhängerkupplung (8a, 8b) oberhalb des Nutzraums (6b) des Zugfahrzeugs (6) angeordnet ist, wobei sich das eine Kupplungsteil (8b) an der Unterseite des nach oben abgewinkelten Bereichs (1b) des Wohnanhängers (1) befindet und das andere Kupplungsteil (8a) am Zugfahrzeug (6) gehalten ist.

2. Gespann nach Anspruch 1, dadurch gekennzeichnet, daß das den nach oben abgewinkelten Bereich (1b) des Wohnanhängers (1) überspannende Dachteil (3) anhebbar ist.

3. Gespann nach Anspruch 2, dadurch gekennzeichnet, daß der Raum unter dem angehobenen Dachteil (3) mittels Planen, festen Bauelementen od.dgl. in einen allseitig geschlossenen Raum umwandelbar ist.

4. Gespann nach den Ansprüchen 1 - 3, dadurch gekennzeichnet, daß der nach oben abgewinkelte Bereich (1b) des Wohnanhängers (1) sich nach vorn über das Dach (6a) des Zugfahrzeugs (6) hinaus erstreckt.

5. Gespann nach den Ansprüchen 1 - 4, dadurch gekennzeichnet, daß in der Wand des Wohnanhängers (1), welche dessen untere Bodenfläche (1a₁) mit der Bodenfläche (1b₁) des abgewinkelten Bereichs (1b) verbindet, eine vorzugsweise als Tür ausgebildete Öffnung vorgesehen ist.

6. Gespann nach Anspruch 1, dadurch gekennzeichnet, daß die Anhängerkupplung (8a, 8b) sich etwa auf der Hälfte des Radstands befindet.

7. Gespann nach den Ansprüchen 1 und 6, dadurch gekennzeichnet, daß das andere Kupplungsteil (8a) auf einem biegesteifen Querträger (11) angebracht ist, der mittels zweier Seitenteile (13a bzw. 13b) im Bereich des seitlichen Dachrahmens ($6a_1$) am Zugfahrzeug (6) gehalten ist.

8. Gespann nach Anspruch 7, dadurch gekennzeichnet, daß die Seitenteile (13a bzw. 13b) der Kontur des Dachrahmens ($6a_1$) angepaßt und damit formschlüssig verbunden sind.

9. Gespann nach den Ansprüchen 7 und 8, dadurch gekennzeichnet, daß die Seitenteile (13a bzw. 13b) mit dem Dachrahmen ($6a_1$) über lösbare Klemmstücke (15) verbunden oder aber damit verschraubt, vernietet, verklebt oder verschweißt sind.

10. Gespann nach den Ansprüchen 7 - 9, dadurch gekennzeichnet, daß die Seitenteile (13a) gegen das Dach (6a) des Zugfahrzeugs (6) über Gummiformstücke (16) abgestützt und mittels des Querträgers (11) gespannt sind.

11. Gespann nach Anspruch 7 und mindestens einem der folgenden, dadurch gekennzeichnet, daß der Querträger (11) gegen das Dach (6a) des Zugfahrzeugs (6) mittels einer großflächigen elastischen Scheibe (12) abgestützt ist.

12. Gespann nach Anspruch 11, dadurch gekennzeichnet, daß die Scheibe (12) als Saugnapf ausgebildet und evakuierbar ist.

13. Gespann nach Anspruch 7 und mindestens einem der folgenden, dadurch gekennzeichnet, daß der Querträger (11) in Längsrichtung des Zugfahrzeugs (6) über Streben (10) dagegen abgestützt ist.

14. Gespann nach Anspruch 7 und mindestens einem der folgenden, dadurch gekennzeichnet, daß der Querträger (11) zum Gepäckträger umrüstbar ist.

15. Gespann nach den Ansprüchen 1 und 6, dadurch gekennzeichnet, daß das Kupplungsteil (8a) über einen Teller (8c) unmittelbar gegen das Dach (6a) des Zugfahrzeugs (6) abgestützt ist, der mit einem gegen die Dachunterseite anliegenden Teller (8d) verspannt ist, welcher seinerseits mittels eines Stützteils (8e) mit dem Boden der Karosserie (6c) verbunden ist.

FIG. 1

FIG. 3a₁    FIG. 2

8a
8c
8d
8e

IIIb
IIIa
8a    7
10    6a    10
6    6b
9
6c

FIG. 3a₂

FIG. 3b₁

FIG. 3b₂

FIG. 4